# EUROPÄISCHE PATENTSCHRIFT

(11) **EP 2 869 035 B1**
(45) Veröffentlichungstag und Bekanntmachung des Hinweises auf die Patenterteilung: **03.08.2016**
(21) Anmeldenummer: 13190680.2
(22) Anmeldetag: 29.10.2013
(51) Int. Cl.: G01D 5/48, H02K 11/215, H02K 41/03

(54) **Positionsmesssystem und Regelungsverfahren für verkettete Linearmotoren**
Position measuring system and control method for linear motors linked together
Système de mesure de position et procédé de régulation pour moteurs linéaires concaténés

(43) Veröffentlichungstag der Anmeldung: 06.05.2015
(73) Patentinhaber: Siemens Aktiengesellschaft, 80333 München (DE)
(72) Erfinder: Knorr, Markus, 86157 Augsburg (DE)

(56) Entgegenhaltungen:
- EP-A1- 2 161 826
- EP-A2- 2 325 039
- WO-A1-2004/103792
- DE-A1-102008 008 602
- DE-A1-102009 041 483

## Beschreibung

Die Erfindung betrifft ein Positionsmesssystem für verkettete Linearmotoren sowie ein Regelungsverfahren für solche Linearmotoren, das auf einer von dem Positionsmesssystem erhältlichen Positionsinformation basiert.

Linearmotoren sind an sich bekannt. Auch verkettete Linearmotoren sind bekannt. Eine typische Beispielanwendung eines verketteten Linearmotors sind sogenannte Sorter, bei denen die einzelnen Motorglieder an zu einer Kette gekuppelten Carriern montiert sind. Typischerweise sind die Carrier in einer Endlosschleife geschlossen.

Unter einem verketteten Aufbau ist also insbesondere ein Linearmotor zu verstehen, bei dem entweder das Primärteil oder das Sekundärteil entlang der jeweiligen Fahrstrecke in einzelne Glieder unterteilt ist. Die Glieder sind zum Beispiel über eine Kupplung mechanisch miteinander verbunden. Aufgrund der Kupplung entstehen Lücken zwischen den Motorgliedern sowie Lücken in der magnetischen Polfolge. Bei Synchronmotoren entspricht die Weite einer solchen Lücke zweckmäßigerweise einem ganzzahligen Vielfachen n der Polteilung T = 360° elektrisch. Aufgrund der mechanischen Kupplung wird die Weite solcher Lücken jedoch niemals exakt der Polteilung entsprechen, sondern vielmehr Toleranzen aufweisen. Solche Toleranzen stören allerdings den Gleichlauf des Linearmotors.

Für eine wirkungsgradoptimale Regelung von Synchronmotoren mit gutem Gleichlauf sind gebergestützte Regelverfahren prinzipiell im Vorteil gegenüber geberlosen Verfahren, da sich bei geberlosen Regelungsverfahren die Lücken zwischen den Gliedern ungünstig auf die auf das Motormodell gestützte Berechnung der Pollage und der Geschwindigkeit auswirken.

Problematisch ist in diesem Zusammenhang allerdings die ebenfalls gegliederte Realisierung des jeweiligen Gebers. Die oben erwähnten Toleranzen führen auch bei den Gebern zu Lücken schwankender Breite und damit bei vom Geber gelieferten Positionsinformationen zu Schwankungen über den Lücken. Dies erschwert die Auswertung und Verwendung der jeweiligen Messergebnisse für eine Regelung des Linearmotors bzw. führt wiederum zu schlechten Gleichlaufergebnissen und schlechtem Wirkungsgrad.

Als Geber zur Messung einer Pollage kommen zum Beispiel Magnetfeldsensoren in Betracht. Ein Beispiel für solche Magnetfeldsensoren ist ein sogenannter, an sich bekannter Hall-Sensor.

Beim Stand der Technik werden Maschinen, zum Beispiel Maschinen für die eingangs erwähnten Sorter-Anwendungen, mit herkömmlichen Linearsynchronmotoren realisiert. Bei der herkömmlichen Synchrontechnik für verkettete Linearmotoren werden im Fall einer Anwendung bei einem Sorter die beweglichen Motorglieder mit den Permanentmagneten des Motors bestückt. Zur Messung der Pollage der Sekundärteile sind als Magnetfeldsensoren Hall-Sensoren in Verlängerung des Primärteils angebracht. Der Nachteil einer solchen Lösung besteht allerdings darin, dass diese nur bei permanentmagnetischen Sekundärteilen anwendbar ist. Darüber hinaus werden die Hall-Sensoren ebenfalls durch Lücken zwischen den Motorgliedern gestört, so dass solche Störungen gegebenenfalls durch mehrere hintereinander angeordnete Hall-Sensoren ausgeglichen werden müssen. Letzteres führt zu einer Verlängerung des Primärteils. Bei Fahrstrecken mit vielen Kurven ist dies ein zusätzlicher Nachteil.

Aus der WO 2004/103782 A ist ein Verfahren bekannt, bei dem zur Erfassung in einer Wegstrecke in jedem Streckensegment ein als Empfänger des dortigen Positionsmesssystems fungierender Messstab angeordnet ist und ein entlang der Wegstrecke bewegter Wagen zumindest zwei Markierungsmagnete als mit dem Empfänger zusammenwirkende Geber aufweist. Normalerweise wird die mit dem ersten, vorderen Markierungsmagnet aufgenommene Positionsinformation verwendet. Beim Überfahren einer Grenze zwischen zwei Messstäben wird ab einem bestimmten Abstand zum vorderen Ende des Messstabs der hintere Markierungsmagnet zur Erfassung der Positionsinformation verwendet. Aus der EP 2 161 826 A ist ein Verfahren bekannt, bei dem ein langgestreckter Empfänger eines Positionsmesssystems (dort als Geber bezeichnet) in zwei Abschnitte unterteilt wird, so dass eine unabhängige Positionserfassung und eine unabhängige Positionierung zweier aufeinander folgender, aber nicht gekoppelter Wagen möglich wird. Aus der DE 10 2009 041 483 A ist die Verwendung von RFID-Tags zur Positionsbestimmung eines Primärteils eines Linearmotors bekannt.

Eine Aufgabe der vorliegenden Erfindung besteht entsprechend darin, ein Positionsmesssystem anzugeben, das eine unterbrechungsfreie Messung über eine Lücke zwischen den Gliedern eines verketteten Linearmotors hinweg erlaubt. Eine weitere Aufgabe der Erfindung besteht darin, auf Basis einer mittels des Positionsmesssystems erhältlichen Positionsinformation ein Regelungsverfahren für verkettete Linearmotoren anzugeben.

Diese Aufgabe wird hinsichtlich des Positionsmesssystems erfindungsgemäß mit den Merkmalen des Anspruchs 1 gelöst. Dabei ist bei einem Positionsmesssystem für verkettete Linearmotoren Folgendes vorgesehen: Der Linearmotor umfasst zumindest ein Primärteil und zumindest zwei gekoppelte Sekundärteile oder zumindest ein Sekundärteil und zumindest zwei gekoppelte Primärteile. Die beweglichen Motorglieder, also die gekoppelten Primär- oder Sekundärteile, sind jeweils einem Wagen einer mit dem Linearmotor angetriebenen Wagenkette zugeordnet, wobei die Gesamtheit der Wagen beim Betrieb des Linearmotors entlang einer Fahrstrecke beweglich ist. Jedem Wagen ist ein Positionsgeber zugeordnet. Der Fahrstrecke ist ein für den Positionsgeber sensitiver Empfänger zugeordnet. Der Empfänger ist längs zur Fahrstrecke ausgerichtet und befindet sich zum Beispiel neben dem ortsfesten Motorteil, also bei beweglichen Motorgliedern in Form zumindest zweier verketteter Sekundärteile neben dem zumindest einen Primärteil oder bei beweglichen Motorgliedern in Form zumindest zweier verketteter Primärteile neben dem zumindest einen Sekundärteil. Mittels des Empfängers ist eine Positionsinformation generierbar oder ausgebbar, die eine relative Lage des Positionsgebers zum Empfänger kodiert. Dabei ist die Positionsinformation als eine numerische Wertzahl, welche durch die relative Lage des Positionsgebens (20) zum Empfänger (22) erzeugbar ist, ausgebildet. Der Empfänger weist eine im Vergleich zu einer in Fahrtrichtung der Wagen gemessenen Länge jedes Wagens zumindest gleich große Länge auf. Wenn der Empfänger eine im Vergleich zu einer in Fahrtrichtung der Wagen gemessenen Länge jedes Wagens größere Länge aufweist, ist gewährleistet, dass sich stets der Positionsgeber zumindest eines Wagens in einem Erfassungsbereich des Empfängers befindet. Damit ist stets eine zur geregelten Ansteuerung des verketteten Linearmotors geeignete Positionsinformation erhältlich, die nicht nur unabhängig von einer eventuell schwankenden Breite der Lücken zwischen den verketteten Primär- oder Sekundärteilen ist, sondern auch ein bisher oftmals beobachte tes Aufaddieren der aufgrund solcher Lücken resultierenden Fehler vermeidet. Des Weiteren ist vorgesehen, dass im Falle von zwei gleichzeitig im Erfassungsbereich des Empfängers befindlichen Positionsgebern zwei Positionsinformationen resultieren, von denen nur die numerisch kleinere Positionsinformation verwendet wird. Dies sorgt für mathematisch einfache Verhältnisse. Eine besondere Konstellation, bei der dies ausgenutzt wird, ist weiter unten beschrieben.

Wenn der Empfänger nur eine gleich große Länge wie die Wagen aufweist (oder gegebenenfalls auch kürzer ist), besteht die Möglichkeit, dass zu bestimmten Zeitpunkten, wenn also kein Positionsgeber im Erfassungsbereich des Empfängers ist, keine Positionsinformation vom Empfänger erhältlich ist. Dann schaltet das Positionsmesssystem automatisch in einen geberlosen, insbesondere motormodellgestützten Betrieb um verwendet die so erhältliche Positionsinformation solange, bis wieder ein Positionsgeber in den Erfassungsbereich des Empfängers eintritt und das Positionsmesssystem dann wieder automatisch auf die Erfassung der Positionsinformation mittels des Empfängers umschaltet. Dies ist auch eine Möglichkeit, wie das Positionsmesssystem automatisch mit einer Fehlersituation in Form eines fehlenden oder in seiner Position verstellten Positionsgebers umgehen kann. Dann kommt nämlich in Betracht auf Basis der fehlenden Erfassung eines Positionsgebers nicht unmittelbar ein Fehlersignal zu erzeugen, sondern automatisch ebenfalls auf einen geberlosen, insbesondere motormodellgestützten Betrieb umzuschalten. Die Auslösung eines Fehlersignals kann dann zum Beispiel dennoch erfolgen, wenn innerhalb einer vorgegebenen oder vorgebbaren Zeitspanne kein gültiges Signal von der Positionsgeber-Empfänger-Kombination erhältlich ist. Zur Überwachung kommt zum Beispiel ein sogenannter Watchdog in Betracht.

Vorteilhafte Ausgestaltungen der Erfindung sind Gegenstand der Unteransprüche. Dabei verwendete Rückbeziehungen weisen auf die weitere Ausbildung des Gegenstandes des Hauptanspruches durch die Merkmale des jeweiligen Unteranspruches hin. Sie sind nicht als ein Verzicht auf die Erzielung eines selbständigen, gegenständlichen Schutzes für die Merkmalskombinationen der rückbezogenen Unteransprüche zu verstehen. Des Weiteren ist im Hinblick auf eine Auslegung der Ansprüche bei einer näheren Konkretisierung eines Merkmals in einem nachgeordneten Anspruch davon auszugehen, dass eine derartige Beschränkung in den jeweils vorangehenden Ansprüchen nicht vorhanden ist. Schließlich ist darauf hinzuweisen, dass das hier angegebene Verfahren auch entsprechend der abhängigen Vorrichtungsansprüche weitergebildet sein kann und umgekehrt.

Bei einer besonderen Ausführungsform des Positionsmesssystems wird gewährleistet, dass bei mehr als einer Positionsinformation stets nur die numerisch kleinste Positionsinformation verwendet wird, indem das Positionsmesssystem nur die numerisch kleinste Positionsinformation an eine Steuerungs-/Regelungseinrichtung des verketteten Linearmotors übermittelt. Letzteres minimiert die Anforderungen an eine Schnittstelle zwischen dem Positionsmesssystem und der Steuerungs-/Regelungseinrichtung.

Als Empfänger und Positionsgeber kommen ein magnetostriktiver Wegaufnehmer bzw. ein Permanentmagnet in Betracht. Ein solcher Empfänger/Wegaufnehmer hat den Vorteil, dass dessen Generierung einer Positionsinformation anhand einer Lage des Permanentmagneten relativ zu seiner Längserstreckung nicht durch die von dem verketteten Linearmotor ausgehenden Magnetfelder beeinflusst wird. Alternativ kommt grundsätzlich auch eine Empfänger-Positionsgeber-Kombination in Betracht, die auf einem kapazitiven, optischen, magnetischen, resistiven, usw. Wirkprinzip beruht.

Bei einer weiteren Ausführungsform des Positionsmesssystems sind die Positionsgeber jeweils in der Mitte des einem Wagen zugeordneten Primär- oder Sekundärteils angeordnet. Dies gewährleistet eine ausreichende Überdeckung der jeweiligen beweglichen und ortsfesten Motorglieder, sobald und solange sich der Positionsgeber im Erfassungsbereich des Empfängers befindet.

Die oben genannte Aufgabe wird auch mit einem Regelungsverfahren für einen verketteten Linearmotor gelöst, das sich dadurch auszeichnet, dass ein Istwert für eine Regelung des verketteten Linearmotors mittels eines Positionsmesssystems der hier und im Folgenden beschrieben Art ermittelt wird. Der Vorteil der Verwendung eines solchen und im Folgenden mit weiteren Details beschriebenen Positionsmesssystems besteht darin, dass die von dem Positionsmesssystem erhältliche Positionsinformation die Verwendung bekannter Regelungsverfahren und -algorithmen erlaubt.

Vorteilhafte Ausgestaltungen des Regelungsverfahrens sind Gegenstand der auf den betreffenden Anspruch rückbezogenen Unteransprüche oder ergeben sich aus einer Umsetzung einzelner oder mehrerer Merkmale des Anspruchs und der darauf rückbezogenen Ansprüche.

Bei einer Ausführungsform des Regelungsverfahrens werden die von dem Positionsmesssystem erhaltenen Positionsinformationen auf einen Winkelbereich von 0° bis 359° abgebildet und die Motorregelung erfolgt wie die Regelung bei einem rotierenden Synchronmotor. Dies ist ein Beispiel für die weiter oben erwähnten einfachen Verhältnisse, die mit dem hier vorgeschlagenen Verfahren ausgenutzt werden können. Die Grundlagen für eine Regelung eines rotierenden Synchronmotors sind seit langem bekannt. Auf diese kann bei der Abbildung der zunächst eine lineare Position kodierenden Positionsinformationen auf den Winkelbereich eines Vollkreises zurückgegriffen werden.

Bei einer weiteren Ausführungsform des Regelungsverfahrens wird zum Erhalt einer Information zur absoluten Position des Linearmotors eine Positionsinformation in einem Bereich von 0° bis zu einem der Anzahl der Wagen entsprechenden Vielfachen von 360° erfasst.

Wenn gemäß einer nochmals weiteren Ausführungsform des Regelungsverfahrens zumindest einer der Wagen mit einer automatisch abfragbaren Kennung, insbesondere einem RFID-Tag, versehen ist, lässt sich bei einer geschlossenen Kette der beweglichen Motorglieder nach einem Durchlauf eine Absolutposition ermitteln.

Wenn bei einer besonderen Ausführungsform alle Wagen mit einer automatisch abfragbaren Kennung versehen sind, braucht ein solcher vollständiger Durchlauf nicht abgewartet werden.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Das Ausführungsbeispiel ist nicht als Einschränkung der Erfindung zu verstehen. Vielmehr sind im Rahmen der vorliegenden Offenbarung auch Modifikationen möglich, insbesondere solche Varianten und Kombinationen, die zum Beispiel durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen bzw. Elementen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen.

Es zeigen:
- FIG 1: eine schematisch vereinfachte Darstellung eines Line-armotors mit einem einer Fahrstrecke zugeordneten Primärteil und einem beweglichen Sekundärteil,
- FIG 2: eine schematisch vereinfachte Darstellung eines verketteten Linearmotors mit einem Primärteil und mehreren gekoppelten Sekundärteilen sowie eine Momentaufnahme bei der Bewegung der Sekundärteile,
- FIG 3: eine Momentaufnahme wie in FIG 2, allerdings zu einem anderen Zeitpunkt und
- FIG 4: eine Situation, bei der die beweglichen Motorglieder eines verketteten Linearmotors in einer geschlossenen Kette angeordnet sind, und die damit entlang einer ebenfalls geschlossenen Fahrstrecke beweglichen Wagen einer mit einem solchen Motor realisierten Maschine.

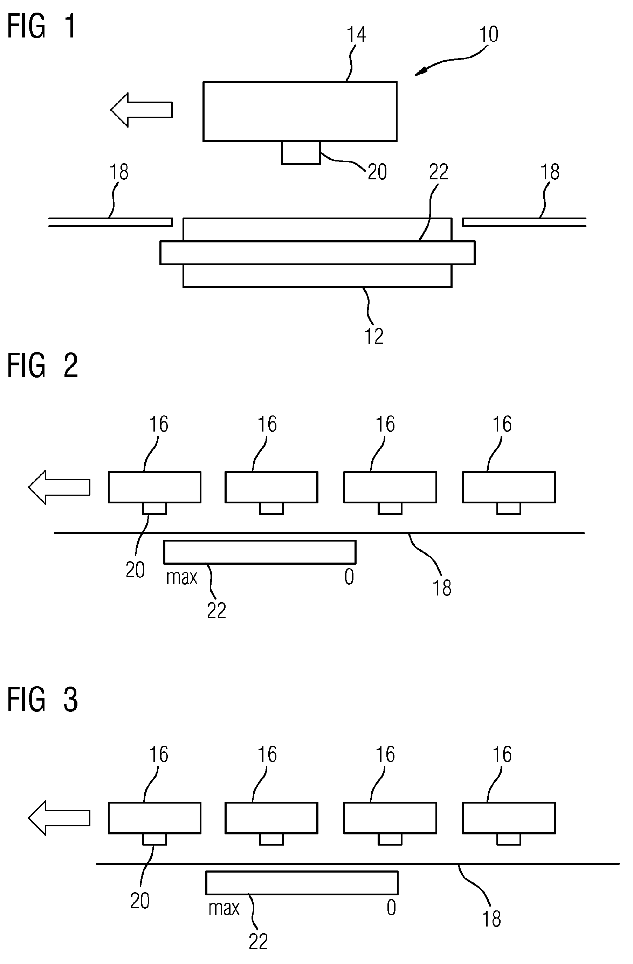

Die Darstellung in FIG 1 zeigt schematisch stark vereinfacht einen Linearmotor 10 mit einem ortsfesten Primärteil 12 und einem beweglichen Sekundärteil 14. In FIG 1 ist nur ein Sekundärteil 14 gezeigt. Tatsächlich kann ein Linearmotor 10 eine Mehrzahl von beweglichen Sekundärteilen 14 umfassen, die zum Beispiel in einer Sorteranwendung als Basis für einzelne Wagen 16 (FIG 2) fungieren.

Das Primärteil 12 umfasst in an sich bekannter Art und Weise Permanentmagnete (nicht gezeigt) und ist in die jeweilige Fahrstrecke (Fahrweg) 18 integriert. Das oder jedes Sekundärteil 14 weist in ebenfalls an sich bekannter Art und Weise einen in Bewegungsrichtung orientierten, gezahnten Eisenkern (nicht gezeigt) auf. Die Bewegungsrichtung ist in FIG 1 mit dem nach links weisenden Blockpfeil veranschaulicht.

Die Erwähnung des Primärteils 12 als ortsfest ist nur beispielhaft zu verstehen. Tatsächlich ist es nicht relevant, ob verkettete Primärteile 12 oder verkettete Sekundärteile 14 als bewegliche Motorglieder und damit als Basis für die Wagen 16 fungieren. Die Beschreibung des Ausführungsbeispiels wird - ohne Verzicht auf eine weitergehende Allgemeingültigkeit - anhand eines ortsfesten Primärteils 12 und mehrerer beweglicher und verketteter Sekundärteile 14 fortgesetzt.

In FIG 1 ist noch gezeigt, dass das als Basis für einen Wagen 16 fungierende Sekundärteil 14 einen Positionsgeber 20 umfasst und dass der Fahrstrecke 18, insbesondere dem Primärteil 12, ein mit dem Positionsgeber 20 zusammenwirkender, langgestreckter und längs der Fahrstrecke 18 orientierter Empfänger 22 zugeordnet ist. Bei der dargestellten Situation befinden sich das Primärteil 12 und der Empfänger 22 in paralleler Ausrichtung nebeneinander.

Bei dem Empfänger 22 handelt es zum Beispiel um einen grundsätzlich an sich bekannten, magnetostriktiven Wegaufnehmer. Ein mit einem solchen Empfänger 22 zusammenwirkender Positionsgeber 20 ist ein an jedem Wagen 16 insbesondere mittig zum dortigen Sekundärteil 14 angebrachter Permanentmagnet. Eine Beschreibung der Funktion eines magnetostriktiven Wegaufnehmers scheint hier nicht erforderlich. Stattdessen wird auf die insoweit einschlägige Literatur verwiesen. Als Empfänger 22 in Form eines magnetostriktiven Wegaufnehmers kommt zum Beispiel ein von dem Unternehmen MTS Systems Corporation unter der Marke "Temposonics" angebotener Sensor in Betracht. Der Vorteil der Verwendung eines magnetostriktiven Wegaufnehmers als Empfänger 22 besteht vor allem darin, dass dessen Positionsauswertung offenbar unabhängig von den vom Linearmotor 10 ausgehenden Magnetfeldern ist, zumindest hat sich herausgestellt, dass vom Linearmotor 10 ausgehende Streufelder aufgrund des Abstands unkritisch sind. Weitere Vorteile sind ein einfacher Sender (Positionsgeber 20), nämlich ein Sender in Form eines Permanentmagneten, die Unempfindlichkeit der Positionsgeber-Empfänger-Kombination, gegen Einflüsse, wie sie im industriellen Einsatz oftmals zu erwarten sind, also zum Beispiel eine Unempfindlichkeit gegen Staub, Öl und dergleichen, sowie eine größere Toleranz als zum Beispiel optische Geber im Hinblick auf den Abstand (Luftspalt) zwischen Positionsgeber und Empfänger.

Die Darstellung in FIG 2 zeigt eine Wagenkette mit mehreren Wagen 16 in Form mehrerer verketteter Sekundärteile 14 des in FIG 1 gezeigten Linearmotors 10. Jeder Wagen 16 weist einen Positionsgeber 20 (FIG 1) auf. Die Begriffe Wagen 16 und Sekundärteil 14 werden im Folgenden mitunter synonym benutzt. Immer dann, wenn von einem Wagen 16 die Rede ist, ist mitzulesen, dass ein solcher Wagen 16 auf einem beweglichen Motorglied, hier einem beweglichen Sekundärteil 14, basiert und entsprechend ein solches Motorglied umfasst. Bei jedem Wagen 16 sind das bewegliche Motorglied, hier also das Sekundärteil 14 (FIG 1), und der Positionsgeber 20 an stets gleichen Positionen angebracht.

Wenn sich ein Positionsgeber 20 im Erfassungsbereich des Empfängers 22 befindet, erzeugt der Empfänger 22 eine Positionsinformation entsprechend dem Ort des Positionsgebers 20 relativ zum Empfänger 22. Symbolisch kann die dabei erzeugte Positionsinformation ("pos") als insbesondere natürliche Zahl in einem Intervall von "0" bis zu einem Maximalwert "max" ( pos = [0..max] ) angegeben werden. Diese Werte sind auch in der Darstellung in FIG 2 eingetragen. Daraus ergibt sich, dass die vom Empfänger 22 erzeugte Positionsinformation umso größer wird, je mehr sich der Positionsgeber 20 dem in Fahrtrichtung voraus liegenden Ende des Empfängers 22 nähert.

Die Darstellung in FIG 2 ist eine Momentaufnahme bei der Bewegung der Wagen 16 zu einem ersten Zeitpunkt. Die Darstellung in FIG 3 ist eine Momentaufnahme bei der Bewegung der Wagen 16 zu einem späteren, zweiten Zeitpunkt. Der Unterschied zwischen den beiden gezeigten Momentaufnahmen besteht vor allem darin, dass sich bei der in FIG 3 gezeigten Situation die Positionsgeber 20 zweier Wagen 16 im Erfassungsbereich des Empfängers 22 befinden. Wenn sich gleichzeitig zwei (oder mehr) Positionsgeber 20 im Erfassungsbereich des Empfängers 22 befinden, erzeugt der Empfänger 22 zwei (oder mehr) Positionsinformationen ("pos1", "pos2") die jeweils in dem o.g. Intervall liegen ( pos1, pos2 = [0..max] ). Bei dem hier vorgeschlagenen Ansatz ist allerdings vorgesehen, dass jeweils nur der kleinste Positionswert ("pos1") berücksichtigt wird.

Aufgrund der regelmäßigen Abfolge der Positionsgeber 20 innerhalb der durch die gekoppelten Wagen 16 gebildeten Kette wird hier vorgeschlagen, für eine Regelung des verketteten Linearmotors 10 die von dem Empfänger 22 jeweils gelieferte Positionsinformation ("pos1") wie eine absolute Winkelposition bei einer Regelung eines rotierenden Synchronmotors zu interpretieren. Bei einer Bewegung der Wagen 16 (FIG 2, FIG 3) ergeben sich periodisch Positionsinformationen in einem Wertebereich von "0" bis "max" ( pos1 = [0..max] ), wobei in der Praxis der Maximalwert "max" nicht erreicht wird, wenn zuvor der Positionsgeber 20 des in der Kette nachfolgenden Wagens 16 in den Erfassungsbereich des Empfängers 22 eintritt.

Die Verwendung einer Regelung, wie sie von einem rotierenden Synchronmotor bekannt ist, wird dann besonders einfach, wenn dem Minimalwert die Winkellage 0° und dem jeweils tatsächlich erreichten Maximalwert die Winkellage 359° zugeordnet wird. Dann entspricht ein Fahrweg zwischen zwei Positionsgebern 20 einer virtuellen Geberumdrehung.

Bei insgesamt k Wagen 16 innerhalb der Kette haben alle Wagen 16 nach k x 360° den Empfänger 22 passiert, d.h. nach k x 360° ist die gesamte Kette einmal abgefahren. Damit ist auch die Absolutposition der ganzen Kette in jeder Stellung bekannt.

Innerhalb einer virtuellen Geberumdrehung von 0° bis 359°, die zweckmäßigerweise einem ganzzahligen Vielfachen der Polteilung der Sekundärteile 14 entspricht, kann die bei permanentmagneterregten Synchronmotoren übliche Motorregelung verwendet werden. Bei den Übergängen zwischen 0° und 359° wird die bei einem Synchronmotor mit Singleturnabsolutwertgeber übliche Zählmethode eingesetzt.

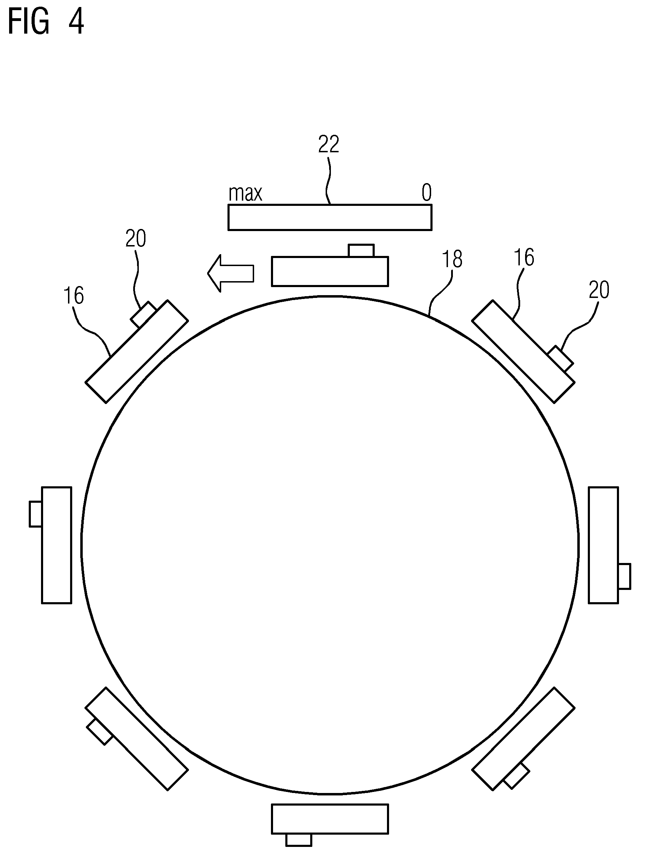

Die Darstellung in FIG 4 zeigt eine Situation mit einer Mehrzahl von Wagen 16, die zu einer geschlossenen Gliederkette gekoppelt sind. Dies entspricht einer Konfiguration, wie sie zum Beispiel bei Sortern oftmals gegeben ist, wobei die kreisförmige Fahrstrecke 18 eine Vereinfachung im Sinne einer möglichst übersichtlichen Darstellung ist. Hier kann die absolute Lage der gesamten Gliederkette wie bei einer Rundachse mit einem Gebergetriebe mit der Übersetzung Ü = 1:Anzahl Kettenglieder ermittelt werden. Soll in jeder Stellung der Gliederkette die Absolutposition direkt ermittelt werden, werden die Wagen 16 mit einer automatisch abfragbaren Kennung versehen. Dafür kommen zum Beispiel RFID-Tags und ein entsprechender Leser (beides nicht dargestellt) in Betracht. Mit einer solchen eindeutigen Identifizierbarkeit der einzelnen Wagen 16 können auch eventuelle Kettenmaßfehler eliminiert werden. Für Situationen, bei denen die Ermittlung der Absolutposition nach spätestens einem kompletten Durchlauf der Kette ausreicht, wird nur einer der Wagen 16 mit einer automatisch abfragbaren Kennung versehen.

Als ideale Position des Positionsgebers 20 relativ zum Sekundärteil 14 (FIG 1) hat sich eine Anordnung in der Mitte des Sekundärteils 14 ergeben. Immer dann, wenn ein so angeordneter Positionsgeber 20 in den Erfassungsbereich des Empfängers 22 gelangt, ergibt sich dann für den jeweiligen Wagen 16 und dessen Sekundärteil 14 ein möglichst großer Überdeckungsbereich zwischen dem beweglichen Sekundärteil 14 und dem ortsfesten Primärteil 12.

Obwohl die Erfindung im Detail durch das Ausführungsbeispiel näher illustriert und beschrieben wurde, so ist die Erfindung nicht durch das oder die offenbarten Beispiele eingeschränkt und andere Variationen können vom Fachmann hieraus abgeleitet werden, ohne den Schutzumfang der Erfindung zu verlassen.

Einzelne im Vordergrund stehende Aspekte der hier eingereichten Beschreibung lassen sich damit kurz wie folgt zusammenfassen:
Die Erfindung ist ein Positionsmesssystem für verkettete Linearmotoren 10, mit einem längs zur jeweiligen Fahrstrecke 18 ausgerichteten Empfänger 22 und einem Positionsgeber 20 an jedem beweglichen Motorglied, wobei mittels des Empfängers 22 eine Positionsinformation generierbar oder ausgebbar ist, die eine relative Lage des Positionsgebers 20 zum Empfänger 22 kodiert, und wobei der Empfänger 22 eine im Vergleich zu einer in Fahrtrichtung der Wagen 16 gemessenen Länge jedes Wagens 16 größere Länge aufweist. Die beschriebene Positionsmesseinrichtung stellt sicher, dass sich Lücken zwischen mehreren Gliedern eines verketteten Linearmotors 10 über mehrere Glieder (Wagen 16) hinweg nicht zu einem bei der Motorregelung merklichen Kettenfehler aufaddieren können. Eine gegebenenfalls notwendige Lücke zwischen den Sekundärteilen 14 wird man vorzugsweise möglichst genau entsprechend einer Polteilung T = 360° elektrisch realisieren, wobei typische Polteilungen ausgeführter Motoren durchaus Versätze im Bereich von +/- 1 mm zulassen, ohne die Kraftwirkung des Primärteils 12 im Übergangsbereich zwischen zwei Sekundärteilen 14 zu beeinträchtigen. Größere, möglichst ganzzahlige Vielfache von T sind möglich, reduzieren aber die Motorkraftwirkung.

## Patentansprüche

1. Positionsmesssystem für verkettete Linearmotoren (10),
- wobei der Linearmotor (10) zumindest ein Primärteil (12) und zumindest zwei gekoppelte Sekundärteile (14) oder zumindest ein Sekundärteil (14) und zumindest zwei gekoppelte Primärteile (12) umfasst,
- wobei die gekoppelten Primär- oder Sekundärteile (12, 14) jeweils einem Wagen (16) einer Wagenkette zugeordnet sind und wobei die Gesamtheit der gekoppelten Wagen (16) beim Betrieb des Linearmotors (10) entlang einer Fahrstrecke (18) beweglich ist,
- wobei jedem Wagen (16) ein Positionsgeber (20) zugeordnet ist,
- wobei der Fahrstrecke (18) ein für den Positionsgeber (20) sensitiver Empfänger (22) zugeordnet ist,
- wobei der Empfänger (22) längs zur Fahrstrecke (18) ausgerichtet ist,
- wobei mittels des Empfängers (22) eine Positionsinformation generierbar oder ausgebbar ist, die eine relative Lage des Positionsgebers (20) zum Empfänger (22) kodiert, und wobei die Positionsinformation als eine numerische Wertzahl, welche durch die relative Lage des Positionsgebers (20) zum Empfänger (22) erzeugbar ist, ausgebildet ist, und
- wobei der Empfänger (22) im Vergleich zu einer in Fahrtrichtung der Wagen (16) gemessenen Länge jedes Wagens (16) eine zumindest gleich große Länge aufweist,
**dadurch gekennzeichnet,**
- **dass** im Falle von zwei gleichzeitig in einem Erfassungsbereich des Empfängers (22) befindlichen Positionsgebern (20), nämlich einem ersten Positionsgeber (20) eines ersten Wagens (16) und einem zweiten Positionsgeber (20) eines mit der ersten Wagen (16) gekoppelten zweiten Wagens (16), zwei Positionsinformationen resultieren und nur die numerisch kleinere Positionsinformation verwendet wird und
- **dass** die von dem Positionsmesssystem erhaltenen Positionsinformationen auf einen Winkelbereich von 0° bis 359° abgebildet werden.

2. Positionsmesssystem nach Anspruch 1, wobei der Empfänger (22) ein magnetostriktiver Wegaufnehmer und der Positionsgeber (20) ein Permanentmagnet ist.

3. Positionsmesssystem nach einem der Ansprüche 1 oder 2, wobei der Positionsgeber (20) in der Mitte des einem Wagen (16) zugeordneten Primär- oder Sekundärteils (12, 14) angeordnet ist.

4. Regelungsverfahren für einen verketteten Linearmotor (10), wobei ein Istwert für eine Regelung des verketteten Linearmotors (10) mittels eines Positionsmesssystems nach einem der Ansprüche 1 bis 3 ermittelt wird und die Motorregelung wie die Regelung bei einem rotierenden Synchronmotor erfolgt.

5. Regelungsverfahren nach Anspruch 4, wobei zum Erhalt einer Information zur absoluten Position des Linearmotors (10) eine Positionsinformation in einem Bereich von 0° bis zu einem der Anzahl der Wagen (16) entsprechenden Vielfachen von 360° erfasst wird.

6. Regelungsverfahren nach einem der Ansprüche 4 oder 5, wobei zumindest einer der Wagen (16) mit einer automatisch abfragbaren Kennung, insbesondere einem RFID-Tag, versehen ist.

7. Regelungsverfahren nach Anspruch 6, wobei alle Wagen (16) mit einer automatisch abfragbaren Kennung versehen sind.

## Claims

1. Position measuring system for concatenated linear motors (10),
- wherein the linear motor (10) comprises at least one primary part (12) and at least two coupled secondary parts (14) or at least one secondary part (14) and at least two coupled primary parts (12),
- wherein the coupled primary or secondary parts (12, 14) in each case are associated with one carriage (16) of a chain of carriages and wherein the entirety of the coupled carriages (16) can move along a track (18) during operation of the linear motor (10),
- wherein each carriage (16) is associated with a position sensor (20),
- wherein the track (18) is associated with a receiver (22) which is sensitive to the position sensor (20),
- wherein the receiver (22) is aligned longitudinally to the track (18),
- wherein by means of the receiver (22), position information can be generated or output which encodes a position of the position sensor (20) relative to the receiver (22), and wherein the position information is embodied as a numerical value which can be generated by the position of the position sensor (20) relative to the receiver (22), and
- wherein the receiver (22) has a length at least equal in comparison to a length of each carriage (16) measured in the direction of travel of the carriage (16),
**characterised in that**
- in the case of two position sensors (20) simultaneously located in a detection area of the receiver (22), namely a first position sensor (20) of a first carriage (16) and a second position sensor (20) of a second carriage (16) coupled to the first carriage (16), the result is two sets of position information and only the numerically smaller set of position information is used and
- that the position information received from the position measuring system is mapped to an angular range of between 0° and 359°.

2. Position measuring system according to claim 1, wherein the receiver (22) is a magnetostrictive position transducer and the position sensor (20) is a permanent magnet.

3. Position measuring system according to one of claims 1 or 2, wherein the position sensor (20) is arranged in the middle of the primary or secondary part (12, 14) associated with a carriage (16).

4. Control method for a concatenated linear motor (10), wherein an actual value for control of the concatenated linear motor (10) by means of a position measuring system according to one of claims 1 to 3 is determined and the motor control is effected in the same way as control for a rotary synchronous motor.

5. Control method according to claim 4, wherein for obtaining information on the absolute position of the linear motor (10), position information is captured in a range from 0° up to a multiple of 360° corresponding to the number of carriages (16).

6. Control method according to one of claims 4 or 5, wherein at least one of the carriages (16) is provided with an automatically interrogatable identifier, in particular an RFID tag.

7. Control method according to claim 6, wherein all carriages (16) are provided with an automatically interrogatable identifier.

## Revendications

1. Système de mesure de position pour des moteurs ( 10 ) linéaires concaténés,
- dans lequel le moteur ( 10 ) linéaire comprend au moins une partie ( 12 ) primaire et au moins deux parties ( 14 ) secondaires couplées ou au moins une partie ( 14 ) secondaire et au moins deux parties ( 12 ) primaires couplées,
- dans lequel les parties ( 12, 14 ) primaires ou secondaires couplées sont associées respectivement à un chariot ( 16 ) d'une chaîne de chariot et dans lequel l'ensemble des chariots ( 16 ) couplés est, lorsque le moteur ( 10 ) linéaire est en fonctionnement, mobile le long d'une voie ( 18 ) de circulation,
- dans lequel un indicateur ( 20 ) de position est associé à chaque chariot ( 16 ),
- dans lequel un récepteur ( 22 ) sensible à l'indicateur ( 20 ) de position est associé à la voie ( 18 ) de circulation,
- dans lequel le récepteur ( 22 ) est orienté en long par rapport à la voie ( 18 ) de circulation,
- dans lequel il peut être créé ou émis, à l'aide du récepteur ( 22 ), une information de position, qui code une position relative de l'indicateur ( 20 ) de position par rapport au récepteur ( 22 ), et dans lequel l'information de position est constituée sous la forme d'une valeur numérique, qui peut être produite par la position relative de l'indicateur ( 20 ) de position par rapport au récepteur ( 22 ) et
- dans lequel le récepteur ( 22 ) a, par rapport à une longueur de chaque chariot ( 16 ) mesurée dans le sens de marche du chariot ( 16 ), une longueur au moins aussi grande, **caractérisé**
- **en ce que**, dans le cas de deux indicateurs ( 20 ) de position se trouvant en même temps dans la portée du récepteur ( 22 ), à savoir un premier indicateur ( 20 ) de position d'un premier chariot ( 16 ) et un deuxième indicateur ( 20 ) de position d'un deuxième chariot ( 16 ) couplé au premier chariot, il s'ensuit deux informations de position et seule l'information de position la plus petite numériquement est utilisée et
- **en ce que** les informations de position obtenues par le système de mesure de position sont reproduites sur une plage angulaire de 0° à 359°.

2. Système de mesure de position suivant la revendication 1, dans lequel le récepteur ( 22 ) est un capteur de déplacement magnétostrictif et l'indicateur ( 20 ) de position un aimant permanent.

3. Système de mesure de position suivant l'une des revendications 1 à 2, dans lequel l'indicateur ( 20 ) de position est mis au milieu de la partie ( 12, 14 ) primaire ou secondaire associée au chariot ( 16 ).

4. Procédé de régulation pour un moteur ( 10 ) linéaire concaténé, une valeur réelle pour une régulation du moteur ( 10 ) linéaire concaténé étant déterminée au moyen d'un système de mesure de position suivant l'une des revendications 1 à 3 et la régulation du moteur s'effectuant comme la régulation pour un moteur synchrone tournant.

5. Procédé de régulation suivant la revendication 4, dans lequel, pour obtenir une information sur la position absolue du moteur ( 10 ) linéaire, on relève une information de position dans une plage de 0° jusqu'à un multiple de 360° correspondant au nombre des chariots ( 16 ).

6. Procédé de régulation suivant l'une des revendications 4 ou 5, dans lequel au moins l'un des chariots ( 16 ) est pourvu d'une caractérisation pouvant être demandée automatiquement, notamment d'une étiquette RFID.

7. Procédé de régulation suivant la revendication 5, dans lequel tous les chariots ( 16 ) sont pourvus d'une caractérisation pouvant être demandée automatiquement.
